# EUROPÄISCHE PATENTANMELDUNG

(11) **EP 4 342 952 A1**
(43) Veröffentlichungstag der Anmeldung: **27.03.2024**
(21) Anmeldenummer: 22197814.1
(22) Anmeldetag: 26.09.2022
(51) Int. Cl.: C09D 5/08, B60L 50/64, C08G 18/08, C08G 18/40, C08G 18/54, C08G 18/58, C08L 61/06, C08L 63/00, C09D 5/18, C09D 5/24, C09D 7/60, C09D 175/04

(54) **BESCHICHTUNGSZUSAMMENSETZUNG**

(71) Anmelder: voestalpine Stahl GmbH, 4020 Linz (AT); Salzgitter Flachstahl GmbH, 38239 Salzgitter (DE); Mercedes-Benz Group AG, 70372 Stuttgart (DE); G&S Solution GmbH, 76646 Bruchsal (DE)
(72) Erfinder: Mayrhofer, Robert, 71065 Sindelfingen (DE); Beier, Frank, 34355 Staufenberg (DE); Stellnberger, Karl-Heinz, 4020 Linz (AT); Gros, Georg, 76646 Bruchsal (DE)
(74) Vertreter: Wildhack & Jellinek Patentanwälte

(57) **Zusammenfassung**

Die Erfindung betrifft eine Zusammensetzung zur Beschichtung von Metalloberflächen umfassend ein Bindemittel umfassend ein Phenolharz, ein Epoxidharz, insbesondere ein Phenoxyharz, und ein Polyisocyanat, weiters umfassend zumindest ein Leitpigment und ein Lösungsmittel. Die durch Trocknung aus der Zusammensetzung erhaltene Lackschicht ist korrosionsschützend, nicht brennbar, umformbar und schweißbar.

## Beschreibung

Die Anmeldung betrifft eine Zusammensetzung zur Beschichtung von Metalloberflächen, insbesondere für Batteriekästen von batteriebetriebenen Fahrzeugen. Weiters betrifft die Anmeldung ein Verfahren zum Beschichten von Metalloberflächen, ein mit der Zusammensetzung beschichtetes Blech, einen mit der Zusammensetzung beschichteten Gegenstand und einen Batteriekasten mit einer beschichteten Oberfläche.

Batteriebetriebene Fahrzeuge ermöglichen einen umweltfreundlichen Individualverkehr. Um die Sicherheit von batteriebetriebenen Fahrzeugen weiter zu erhöhen, ist es notwendig, die Fahrzeugbatterie effizient vor Korrosion und mechanischen Beschädigungen zu schützen. Weiters soll vermieden werden, dass bei einem Überhitzen der Batterie die Fahrzeuginsassen oder die Inneneinrichtung des Fahrzeuges durch vorzeitig entstehende Flammen gefährdet werden.

Um diese Ziele zu erreichen, werden Batterien üblicherweise in Batteriekästen, zumeist aus Stahl, verbaut. Dabei ist es besonders wichtig, dass ein geeigneter Korrosionsschutz und ein Schutz vor thermischen Ereignissen bei einem Überhitzen der Batterie gegeben sind. Aus dem Stand der Technik ist es daher bekannt, dass in der Batterie aufwendige Isolationsschichten eingebracht werden, oder auf der Außenseite des Batteriekastens mehrschichtige Lackschichten aufgebracht werden, wobei die erste Schicht zumeist als kathodische Tauchlackierung (KTL) aufgebracht wird. Die Lackschichten sollten vorzugsweise bei der Verschraubung ein geeignetes Setzverhalten zeigen und tolerant gegenüber Beschädigungen im Logistikprozess sein.

Zum Schutz der Batterie eines Elektrofahrzeuges ist aus dem Stand der Technik beispielsweise folgende Möglichkeit bekannt:
DE 102018203921 A1 offenbart beispielsweise ein Kraftfahrzeug, dessen Karosserie oder Batteriegehäuse mit einer intumeszierenden Brandschutzbeschichtung versehen ist, die insbesondere im Brandfall aufschäumendes Polyurethan aufweist.

Für die Verwendung im Fahrzeugbau sind weitere Beschichtungssysteme aus dem Stand der Technik bekannt:
EP 2 016 138 offenbart ein Korrosionsschutzsystem für Metall, wobei die Zusammensetzung ein Bindemittel enthält, insbesondere ein Polyesterharz.

EP 1 030 894 offenbart eine Korrosionsschutzzusammensetzung, die ein Bindemittel aus Polyesterharzen und/oder Epoxidharzen umfasst.

Es besteht jedoch weiterhin ein Bedarf an umweltverträglichen, einfach zu verarbeitenden Zusammensetzungen für die Beschichtung von Metalloberflächen, insbesondere von Batteriekästen, die korrosionsbeständig, umformbar, schweißbar und insbesondere auch nicht entflammbar sind.

Aufgabe der Erfindung ist es somit eine Beschichtungszusammensetzung bereitzustellen, die einen verbesserten Schutz einer Fahrzeugbatterie ermöglicht und die Betriebssicherheit eines batteriebetriebenen Fahrzeuges erhöht.

Diese Aufgabe ist durch die Merkmale des Anspruches 1 gelöst.

Zur Lösung der Aufgabe wird eine Zusammensetzung zur Beschichtung von Metalloberflächen offenbart, die die folgenden Bestandteile umfasst:
a) ein Bindemittel umfassend
   - ein Phenolharz,
   - ein Epoxidharz, insbesondere ein Phenoxyharz,
      und
   - ein Polyisocyanat,
b) zumindest ein Leitpigment
   und
c) ein Lösungsmittel.

Diese Zusammensetzung erlaubt eine besonders umweltfreundliche Beschichtung von Metalloberflächen. Nach dem Auftragen der Zusammensetzung und der Trocknung bzw. Härtung ist das Lösungsmittel verdampft und es kommt es zur Ausbildung einer trockenen Lackschicht. Das Bindemittel umfasst mehrere Bestandteile. Phenolharze sind Kunstharze, die durch Polykondensation aus Phenolen und Aldehyden, insbesondere Formaldehyd, herstellt werden. Epoxidharze sind Kunstharze, die eine Epoxidgruppe aufweisen, die sich bei der Härtung öffnet und vernetzt. Polyisocyanate sind organische Verbindungen, die zwei oder mehr Isocyanatgruppen enthalten und daher hochreaktiv sind. Bei der Trocknung kommt es zu Additionsreaktionen. Durch Vernetzung der Bestandteile kommt es bei der Trocknung zur Ausbildung einer Matrix. Das Bindemittel bildet somit eine polymere duroplastische Matrix aus. Die Pigmente sind in der Matrix eingelagert. Das Leitpigment sind elektrisch leitfähige Partikel.

Die Zusammensetzung ist besonders geeignet für eine Beschichtung mit einer Trockenfilmdicke von 2 bis 20 µm.

Die Lackschicht weist auf verschiedensten Oberflächen eine gute Haftung auf, wobei zum Beschichten mit der Zusammensetzung Metalloberflächen besonders geeignet sind, die aus Aluminium, Aluminiumlegierungssystemen oder Stahl bestehen, insbesondere elektrolytisch verzinktem Stahl, schmelztauch verzinktem Stahl, Zink/Magnesium verzinktem Stahl, Zink/Aluminium verzinktem Stahl, Zink/Eisen verzinktem Stahl oder unverzinktem Stahl. Dabei ist die Zusammensetzung zur Beschichtung verschiedener Stahlgüten geeignet, z.B. für Tiefziehgüten und auch für höchstfestes Material.

Die Lackschicht weist einen hohen Korrosionsschutz auf und vermeidet die Entstehung von Flächen-, Kontakt- und Flanschkorrosion. Die Zusammensetzung ist daher besonders gut für Bereiche mit Mischbauweisen aus verschiedenen Materialen geeignet, in denen eine Kontaktkorrosion verhindert werden soll. Da die Zusammensetzung zum Beschichten eines Metallbandes geeignet ist, kann der Korrosionsschutz auch in Bereichen erzielt werden, die durch eine nachträgliche Lackierung nicht erreicht werden können, beispielsweise in Flanschbereichen. Auch ist es möglich, die Zusammensetzung als Ersatz für eine KTL-Überlackierung zu verwenden.

Ein weiterer Vorteil ist, dass die Lackschicht schwerentflammbar ist. Insbesondere entzündet sich die Lackschicht auch auf einem rotglühenden Metall nicht und brennt nicht selbstständig weiter, die Lackschicht ist also bei direkter Temperatureinwirkung von etwa 950° C und darüber nicht entflammbar. Dies kann beispielsweise durch Erhitzen eines beschichteten Metalls mit einem Bunsenbrenner festgestellt werden.

Die erhaltene Lackschicht kann vielseitig weiterverarbeitet werden. So ist die Lackschicht schweißbar, insbesondere auch mit 50 Hz-Verfahren, verschraubbar und verklebbar, selbst mit hochfesten Klebstoffen. Darüber hinaus ist die Lackschicht auch phosphatierbar und KTL-überlackierbar ohne selbst mit der Phosphatierung zu reagieren. Ein beschichtetes Metallblech kann ohne Zusatzbeölung im Tiefziehprozess umgeformt werden, ohne dass es zu einer Beschädigung der Lackschicht kommen würde.

Weiters ist die Beschichtung nicht elektrostatisch aufladbar. Auch eine chemische Beständigkeit gegen alkalische Reiniger, milde Säuren und organische Lösungsmittel ist gegeben.

Die Zusammensetzung ist daher für die Beschichtung von Batteriekästen besonders gut geeignet. Andere Anwendungen in der Elektrik- oder Bauindustrie sind ebenso möglich.

Bevorzugte Weiterbildungen der Erfindung sind in den Unteransprüchen offenbart.

Eine besonders gute Schweißeignung wird erzielt, wenn das Leitpigment Zink und/oder Aluminium enthält oder daraus besteht. Zudem verbessern diese Leitpigmente auch den Korrosionsschutz. Besonders geeignet sind die Leitpigmente als Pulver.

Besonders geeignet ist eine Zusammensetzung, wobei das Leitpigment sphärisches ZinkPulver ist. Die Schweißeignung wird insbesondere verbessert, wenn die Teilchengröße d(100) von 35 µm bis 45 µm, und/oder d(99) von 20 µm bis 25 µm, und/oder d(50) von 3,6 µm bis 4,7 µm, beträgt. Die Verteilung der Partikelgröße kann durch Laserdiffraktometrie nach ISO 13320:2020 bestimmt werden.

Wenn ein Teil der Leitpigmente über das Niveau der Lackschicht hinausragt, ist die Schweißeignung verbessert. Die Schweißeignung ist daher auch verbessert, wenn 0,001 Gew.% bis 1,0 Gew.% der Partikel des Leitpigments eine Teilchengröße von 20 µm bis 45 µm, insbesondere eine Teilchengröße von 20 µm bis 35 µm, aufweisen. Die Teilchengröße kann dabei nach ISO 3549:1995 gemessen werden.

Für eine besonders gute Schweißeignung kann vorgesehen sein, dass das Leitpigment mit 50,0 Gew.% bis 90,0 Gew.%, insbesondere mit 60,0 bis 85,0 Gew.%, vorzugsweise mit 70,0 Gew.% bis 80,0 Gew.%, bezogen auf den Festkörper enthalten ist.

Der Festkörper, also der Gehalt an nichtflüchtigen Anteilen, wird nach DIN EN ISO 3251:2019 bestimmt. Dazu wird 1g der Zusammensetzung für 1 Stunde bei 120° C im Umluftofen abgedampft und anschließend gewogen. Diese Definition des Festkörpers wird für alle nachfolgenden Angaben verwendet.

Um den Korrosionsschutz der Lackschicht zu verbessern kann vorgesehen sein, dass in der Zusammensetzung zumindest ein Korrosionsschutzpigment enthalten ist. Das Korrosionsschutzpigment ist ein vom Leitpigment unterschiedliches Pigment. Besonders geeignet ist eine Zusammensetzung, wobei das Korrosionsschutzpigment ausgewählt ist aus der Gruppe umfassend Zinkphosphate, Aluminium-Triphosphate, Zinkoxid und Silikate.

Ein besonders guter Korrosionsschutz wird erzielt, wenn das Korrosionsschutzpigment ein Silikat ist, insbesondere ein calcium-modifiziertes Silikat, vorzugsweise mit einer Teilchengröße d(50) von 2,5 µm bis 4,0 µm.

Um einen besonders effektiven Korrosionsschutz zu erreichen kann vorgesehen sein, dass das Korrosionsschutzpigment mit 0,1 Gew.% bis 15 Gew.%, insbesondere mit 2,5 Gew.% bis 10,0 Gew.%, vorzugsweise mit 5,0 Gew.% bis 9,0 Gew.%, bezogen auf den Festkörper enthalten ist.

Besonders vorteilhaft ist eine Zusammensetzung, wobei ein Bentonit, insbesondere mit 0,25 Gew.% bis 1,5 Gew.% bezogen auf den Festkörper, enthalten ist. Dadurch wird die Zusammensetzung besonders stabil und haltbar und die Eigenschaften der Lackschicht können verbessert werden. Bentonit hat die CAS-Nummer 1302-78-9.

Besonders stabil und haltbar ist weiters eine Zusammensetzung, wenn ein pyrogenes Siliciumdioxid enthalten ist, insbesondere mit 0,25 Gew.% bis 1,5 Gew.% bezogen auf den Festkörper. Auch die Eigenschaften der Lackschicht können dadurch verbessert werden. Pyrogenes Siliciumdioxid hat die CAS-Nummer 112945-52-5.

Durch das Bindemittel können die Eigenschaften der Zusammensetzung und der Lackschicht ebenfalls verbessert werden:
Als besonders geeignet hat sich eine Zusammensetzung erwiesen, wobei das Phenolharz mit 2,0 Gew.% bis 15,0 Gew.%, insbesondere mit 4,0 Gew.% bis 10,0 Gew.%, vorzugsweise mit 6,0 Gew.% bis 8,0 Gew.%, bezogen auf den Festkörper enthalten ist.

Es kann dabei vorgesehen sein, dass das Phenolharz mit 30 Gew.% und 40 Gew.%, insbesondere mit 35 Gew.% bis 37,5 Gew.%, bezogen auf das Bindemittel enthalten ist.

Besonders geeignet ist auch eine Zusammensetzung, wobei das Epoxidharz mit 1,0 Gew.% bis 10,0 Gew. %, insbesondere mit 2,5 Gew.% bis 7,5 Gew.%, vorzugsweise mit 4,0 Gew.% bis 6,0 Gew.%, bezogen auf den Festkörper enthalten ist.

Es kann vorgesehen sein, dass das Epoxidharz mit 25 Gew.% bis 35 Gew.%, insbesondere mit 30 Gew.% bis 33 Gew.%, bezogen auf das Bindemittel enthalten sind.

Weiters kann vorgesehen sein, dass das Epoxidharz ein Polyether auf der Basis von Bisphenolen, insbesondere Bisphenol A, und Epichlorhydrin ist.

Als besonders geeignet hat sich eine Zusammensetzung erwiesen, wobei das Epoxidharz ein Phenoxyharz ist. Bevorzugt ist dabei ein Phenoxyharz mit einer Molmasse von 52000 bis 60000 Dalton, vorzugsweise mit einer Molmasse von 52000 bis 55000 Dalton. Die Molmasse wird nach DIN EN ISO 16014-5:2012 bestimmt.

Als besonders geeignet hat sich auch eine Zusammensetzung erwiesen, wobei das Bindemittel ein Polyesterharz enthält.

Dabei kann bevorzugt vorgesehen sein, dass das Polyesterharz mit 0,1 Gew.% bis 5,0 Gew.%, insbesondere mit 0,3 Gew.% bis 3,0 Gew.%, vorzugsweise mit 0,5 Gew.% bis 2,0 Gew.%, bezogen auf den Festkörper enthalten ist.

Es kann auch vorgesehen sein, dass das Polyesterharz mit 0,1 Gew.% bis 20,0 Gew.%, insbesondere mit 0,5 Gew.% bis 10,0 Gew.%, vorzugsweise mit 5,0 Gew.%, bezogen auf das Bindemittel enthalten ist.

Wenn die Zusammensetzung ein Polyesterharz enthält, ist es bevorzugt, dass das Polyesterharz eine Molmasse von 5000 bis 20000 Dalton, insbesondere 7000 Dalton, aufweist. Auch hier kann die Molmasse nach DIN EN ISO 16014-5:2012 bestimmt werden.

Als besonders bevorzugt hat sich weiters eine Zusammensetzung erwiesen, wobei das Polyisocyanat ein aliphatisches Polyisocyanat ist.

Ebenso hat es sich als besonders bevorzugt erwiesen, wenn das Polyisocyanat mit 1,0 Gew.% bis 10 Gew.%, insbesondere mit 2,5 Gew.% bis 6,5 Gew%, vorzugsweise mit 3,5 Gew.% bis 5,5 Gew.%, bezogen auf den Festkörper enthalten ist.

Es kann auch vorgesehen sein, dass das Polyisocyanat mit 20,0 Gew.% bis 30,0 Gew.%, insbesondere mit 25,0 Gew.% bis 28,0 Gew.%, vorzugsweise mit 27,5 Gew.%, bezogen auf das Bindemittel enthalten ist.

Weiters kann vorgesehen sein, dass ein blockiertes Polyisocyanat, insbesondere mit einer Deblockierungstemperatur von > 160 °C, enthalten ist. Dabei ist es bevorzugt, wenn das blockierte Polyisocyanat einen Isocyanat-Gehalt von 4,5 % bis 12 %, insbesondere 8,0 % bis 9,0 %, bezogen auf die Gesamtmasse des Polyisocyanats aufweist.

Auch kann vorgesehen sein, dass in der Zusammensetzung ein unblockiertes Polyisocyanat enthalten ist. Dann ist es besonders bevorzugt, wenn das unblockierte Polyisocyanat einen Isocyanat-Gehalt von 16 % bis 22 % bezogen auf das Polyisocyanat hat.

Als besonders geeignet hat es sich erwiesen, wenn in der Zusammensetzung ein blockiertes und ein unblockiertes Polyisocyanat enthalten sind.

Eine Zusammensetzung, wobei das die polymere Matrix bildende Bindemittel ausschließlich aus einem Phenolharz, einem Epoxidharz, insbesondere einem Polyesterharz, und einem Polyisocyanat, besteht, hat sich als besonders geeignet erwiesen. Dabei ist es besonders bevorzugt, wenn die Bestandteile die zuvor angeführten Eigenschaften aufweisen. Es ist somit besonders bevorzugt, dass das Epoxidharz ein Phenoxyharz ist. Zudem ist das Polyisocyanat bevorzugt ein aliphatisches Polyisocyanat. Auf diese Weise kann eine besonders schwerentflammbare und gut umformbare Lackschicht bereitgestellt werden.

Es hat sich gezeigt, dass die Zusammensetzung und die Lackschicht besonders vorteilhafte Eigenschaften aufweisen, wenn das Verhältnis in Gew.% von dem Bindemittel zu den Pigmenten 1,0 : 2,0 bis 1,0 : 6,0, insbesondere 1,0 : 4,0 bis 1,0 : 6,0, vorzugsweise 1,0 : 4,0 bis 1,0 : 5,0, noch bevorzugter 1,0 : 4,0 bis 1,0 : 4,6, beträgt.

Um die Eigenschaften der Zusammensetzung und der Lackschicht zu verbessern kann auch vorgesehen sein, dass in der Zusammensetzung ein Netzmittel, insbesondere ein BlockCopolymer mit pigmentaffinen Gruppen, vorzugsweise ein niedermolekulares ungesättigtes Polycarbonsäurepolymer, enthalten ist. Wenn ein Netzmittel enthalten ist, so ist es besonders bevorzugt, wenn das Netzmittel mit 0,1 Gew.% bis 2,0 Gew.%, insbesondere 0,1 Gew.% bis 1,0 Gew.%, vorzugsweise 0,1 Gew.% bis 0,25 Gew.% bezogen auf den Festkörper enthalten ist.

Es kann auch vorgesehen sein, dass das Netzmittel mit 0,01 Gew.% bis 1,0 Gew.%, insbesondere 0,1 Gew.% bis 0,8 Gew.%, bezogen auf die Pigmente enthalten ist. Ebenso kann vorgesehen sein, dass das Netzmittel mit 1,0 Gew.% bis 4,0 Gew.%, insbesondere 2,5 Gew.% bis 3,7 Gew.% bezogen auf das Bindemittel enthalten ist.

Um die Eigenschaften der Zusammensetzung und des Lackfilms zu verbessern kann auch vorgesehen sein, dass ein Entschäumer enthalten ist, wobei insbesondere vorgesehen ist, dass schaumzerstörende Polymere, vorzugsweise schaumzerstörende Polyacrylate, enthalten sind.

Wenn in der Zusammensetzung ein Entschäumer enthalten ist, so ist es besonders bevorzugt, wenn der Entschäumer mit 0,01 Gew.% bis 2,0 Gew.%, insbesondere 0,1 Gew.% bis 1,0 Gew.%, vorzugsweise 0,1 Gew.% bis 0,25 Gew.%, bezogen auf den Festkörper enthalten ist.

Eine leicht umformbare, besonders schwer oder nicht entflammbare, korrosionsbeständige und gut schweißgeeignete Lackschicht erhält man durch eine Zusammensetzung umfassend ein Phenolharz mit 2 bis 15 Gew.%, ein Epoxidharz mit 1 bis 10 Gew.%, ein Polyesterharz mit 0 bis 5 Gew.%, ein Polyisocyanat mit 1 bis 10 Gew.%, ein Leitpigment mit 50 bis 90 Gew.%, und ein Korrosionsschutzpigment mit 0 bis 15 Gew.%, bezogen auf die den Festkörper.

Insbesondere können weitere Bestandteile enthalten sein, beispielsweise Netzmittel, insbesondere mit 0,1 bis 2,0 Gew.% bezogen auf den Festkörper und/oder Entschäumer, insbesondere mit 0,05 bis 1,5 Gew.% bezogen auf den Festkörper.

Dabei hat es sich als besonders geeignet erwiesen, wenn die genannten Bestandteile die zuvor angeführten Eigenschaften aufweisen.

Besonders stabil und einfach zu verarbeiten ist die Zusammensetzung, wenn der Festkörpergehalt 20 Gew.% bis 95 Gew.%, insbesondere 30 Gew.% bis 85 Gew.%, vorzugsweise 40 Gew.% bis 75 Gew.%, bezogen auf die gesamte Zusammensetzung, also inklusive Lösungsmittel, beträgt.

Die Zusammensetzung ist besonders gut verarbeitbar und haltbar, wenn das Lösungsmittel ausgewählt ist aus der Gruppe von Estern, insbesondere Methoxypropylacetat und/oder Butyldiglycolacetat, Ketonen, insbesondere Cyclohexanon, aromatischen Kohlenwasserstoffen, insbesondere Solvent Naphta, und Mischungen davon. Dadurch kann zudem die Verarbeitung der Zusammensetzung vereinfacht werden und eine kurze Trocknungszeit kann erzielt werden.

Als besonders geeignet hat sich eine Zusammensetzung erwiesen, wobei das Lösungsmittel ein Butyldigylcolacetat, Methoxypropylacetat oder ein Gemisch von Methoxypropylacetat und Butyldigylcolacetat ist.

Besonders vorteilhaft ist weiters eine Zusammensetzung, wobei das Lösungsmittel mit 5 Gew.% bis 80 Gew.%, insbesondere mit 15 Gew.% bis 70 Gew.%, vorzugsweise mit 25 Gew.% bis 60 Gew.%, noch bevorzugter mit 30 Gew.%, bezogen auf die gesamte Zusammensetzung enthalten ist.

Die Zusammensetzung ist besonders haltbar und stabil, wenn sie in einem Verfahren hergestellt wird, das die folgenden Schritte umfasst:
a) Vermischen des Phenolharzes mit einem Teil des Lösungsmittels, insbesondere unter Zugabe von Additiven,
b) insbesondere Zugabe des Korrosionsschutzpigments, und vorzugsweise Nassvermahlung der Mischung, insbesondere auf eine Feinheit von 1 µm bis zu 10 µm,
d) Zugabe des Leitpigments und des restlichen Bindemittels, insbesondere des Epoxidharzes und des Polyisocyanats, unter Rühren
e) Zugabe der restlichen Teile des Lösungsmittels
f) insbesondere Filtration der Zusammensetzung.

Die Feinheit der Nassvermahlung wird im Grindometer nach Hergmann gemäß DIN 53203 bestimmt.

Als Additive können insbesondere die zuvor genannten Bestandteile Netzmittel und/oder Entschäumer und/oder pyrogenes Siliciumdioxid zugegeben werden.

Die Zusammensetzung kann vielfältig verwendet werden, wobei eine Verwendung der Zusammensetzung zum Beschichten von Metallblechen im Coil-Coating-Verfahren, im Spritzverfahren oder im Tauchverfahren möglich ist. Auch eine Verwendung der Zusammensetzung zur Beschichtung von Metallgegenständen im Spritzverfahren oder im Tauchverfahren ist möglich.

Besonders geeignete Metalloberflächen zum Beschichten mit der angeführten Zusammensetzung sind Aluminium, Aluminiumlegierungssysteme oder Stahl, insbesondere elektrolytisch verzinkter Stahl, schmelztauch verzinkter Stahl, Zink/Magnesium verzinkter Stahl, Zink/Aluminium verzinkter Stahl, Zink/Eisen verzinkter Stahl oder unverzinkter Stahl. Ein besonders rasches und einfaches Verfahren zum Beschichten einer Metalloberfläche ist dadurch gekennzeichnet, dass eine Metalloberfläche mit einer zuvor beschriebenen Zusammensetzung beschichtet wird, und die Zusammensetzung bei Temperaturen von 150 °C bis 250 °C Peak Metal Temperature eingebrannt wird, wobei insbesondere vorgesehen ist, dass die Einbrennzeit 15 Sekunden bis 30 Sekunden beträgt. Die Peak Metal Temperature kann durch Temperaturmesstreifen bestimmt werden. Möglich ist auch eine Bestimmung durch Infrarot-Thermometer.

Die Haftung der Lackschicht ist besonders gut, wenn die Metalloberfläche aus einem verzinkten, legierungsverzinkten oder unverzinkten Stahl oder aus Aluminium oder einer Aluminiumlegierung besteht. Die Haftung kann weiter verbessert werden, wenn die Metalloberfläche eine, insbesondere chromfreie, Grundierung umfasst. Als Grundierung besonders geeignet ist eine chemische Konversionsbehandlung, die keine nach ELV RL 2000/53/EG oder RoHS RL 2011/65/EU verbotenen Stoffe enthält.

Die Erfindung betrifft auch ein Metallblech oder einen Metallgegenstand erhältlich durch ein zuvor beschriebenes Verfahren.

Erfindungsgemäß ist weiters ein Metallblech oder ein Metallgegenstand, insbesondere ein Batteriekasten, mit einer Beschichtung umfassend eine Isocyanat-vernetzte, duroplastische Matrix umfassend ein Phenolharz, ein Epoxidharz, insbesondere ein Phenoxyharz und insbesondere umfassend ein Polyesterharz, sowie ein in der duroplastischen Matrix verteiltes Leitpigment und insbesondere ein in der duroplastischen Matrix verteiltes Korrosionsschutzpigment.

Die Bestandteile der Beschichtung können insbesondere die zuvor mit Bezug auf die Zusammensetzung angeführten Eigenschaften aufweisen. Zudem können vorzugsweise auch die zuvor als optional genannten Bestandteile der Zusammensetzung in der Beschichtung enthalten sein. Eine besonders geeignete Ausführungsform betrifft daher ein Metallblech oder einen Metallgegenstand mit einer Beschichtung, die zusätzlich ein Netzmittel und/oder einen Entschäumer und/oder pyrogenes Siliciumdioxid umfasst, vorzugsweise mit den zuvor angeführten speziellen Eigenschaften. Eine solche Beschichtung ist besonders geeignet für Batteriekästen.

Ein besonders guter Korrosionsschutz, eine gute Umformbarkeit und eine gute Schweißeignung haben sich bei einem Metallblech oder einem Metallgegenstand ergeben, wobei die Beschichtung eine Schichtdicke von 2 µm bis 15 µm, insbesondere 4 µm bis 8 µm, aufweist. Wenn der Trockenfilm eine Schichtdicke bis zu 8 µm aufweist, ist die Lackschicht sehr gut schweißgeeignet. Es hat sich zudem gezeigt, dass ab einer Schichtdicke von 6 µm ein sehr guter Korrosionsschutz auch auf Flächen erzielt werden kann.

Ein weiterer Aspekt der Erfindung betrifft einen Batteriekasten, insbesondere für die Batterie eines Elektrofahrzeuges, umfassend zumindest eine, insbesondere der Umgebung zugewandte, also der Batterie abgewandte, beschichtete Metalloberfläche, wobei die Beschichtung in einem zuvor beschriebenen Verfahren hergestellt ist.

Zudem ist auch ein Batteriekasten, insbesondere für die Batterie eines Elektrofahrzeuges, umfassend eine, insbesondere der Umgebung des Batteriekastens zugewandte, beschichtete Metalloberfläche erfindungsgemäß, wobei die Beschichtung umfasst: eine, insbesondere isocyanatisch vernetzte, duroplastische Matrix, die ein Phenolharz, ein Epoxidharz, und insbesondere ein Polyesterharz, umfasst, sowie ein in der duroplastischen Matrix verteiltes Leitpigment, und insbesondere ein in der duroplastischen Matrix verteiltes Korrosionsschutzpigment.

Besonders vorteilhaft ist es, wenn die Bestandteile die zuvor beschriebenen Eigenschaften aufweisen, wenn also beispielsweise das Epoxidharz ein Phenoxyharz ist.

Dabei kann insbesondere vorgesehen sein, dass die Beschichtung zusätzlich einen der zuvor angeführten optionalen Bestandteile der Zusammensetzung umfasst.

Der Batteriekasten umfasst dann also eine Beschichtung, die auf der zuvor beschriebenen Zusammensetzung basiert, insbesondere durch Trocknung bzw. Härtung aus der zuvor beschriebenen Zusammensetzung erhältlich ist.

Vorteilhaften Ausführungsformen der Erfindung werden ohne Einschränkung des allgemeinen erfinderischen Gedankens anhand der folgenden Beispiele dargestellt:

**Tab.1**

| Rezeptur-Varianten | V-1 | V-2 | V-3 | V-4 | V-5 | V-6 | V-7 | V-8 | V-9 | V-10 | V-11 | V-12 | V-13 | V-14 | V-15 | V-16 |
|---|---|---|---|---|---|---|---|---|---|---|---|---|---|---|---|---|
| Organische Bindemittel (auf 100 Gew. % gerechnet) | | | | | | | | | | | | | | | | |
| Phenol harz | 30 | 35 | 37,5 | 30 | 35 | 37,5 | 30 | 35 | 37,5 | 37,5 | 37,5 | 35 | 37,5 | 35 | 37,5 | 30 |
| Phenoxyharz (MW 50000-60000) | - | - | 30 | - | - | 30 | - | - | 30 | 30 | - | - | 30 | - | 30 | 20 |
| Epoxidharz (Typ 1009) | 40 | 32,5 | - | 40 | 32,5 | - | 40 | 32,5 | - | - | 30 | 32,5 | - | 32,5 | - | - |
| Polyesterharz (Weichharz) | - | 5 | 5 | - | 5 | 5 | - | 5 | 5 | 5 | 5 | 5 | 5 | 5 | 5 | 20 |
| BL-Isocyanat (Typ: aliphatisch) | - | 27,5 | 27,5 | - | 27,5 | 27,5 | - | 27,5 | 27,5 | 27,5 | - | 27,5 | 27,5 | 27,5 | 27,5 | 30 |
| BL-Isocyanat (Typ: aromatisch) | 30 | - | - | 30 | - | - | 30 | - | - | - | 27,5 | - | - | - | - | - |

| Pigmente | | | | | | | | | | | | | | | | |
|---|---|---|---|---|---|---|---|---|---|---|---|---|---|---|---|---|
| Zn-Staub (Leitpigment) | 41,8 | 42 | 42 | 47,5 | 47,3 | 47,5 | 49,8 | 50 | 50 | 52,5 | 50 | 53 | 53 | 53,5 | 53,5 | 54 |
| Silikat (KorrosionsschutzPigment) | 5 | 5 | 5 | 5 | 5 | 5 | 6 | 6 | 6 | 5 | 7 | 5 | 5 | 5 | 5 | 5 |
| Pyrogenes Siliciumdioxid | 0,25 | - | - | - | 0,25 | - | 0,25 | - | - | - | 0,5 | 0,5 | 0,5 | 0,75 | 0,75 | 1 |

| Additive | | | | | | | | | | | | | | | | |
|---|---|---|---|---|---|---|---|---|---|---|---|---|---|---|---|---|
| Netzmittel | 0,25 | 0,25 | 0,25 | 0,25 | 0,25 | 0,25 | 0,4 | 0,4 | 0,4 | 0,4 | 0,4 | 0,4 | 0,4 | 0,4 | 0,4 | 0,4 |
| Entschäumer | 0,25 | 0,25 | 0,25 | 0,25 | 0,25 | 0,25 | 0,2 | 0,2 | 0,2 | 0,2 | 0,2 | 0,2 | 0,2 | 0,2 | 0,2 | 0,2 |

| Organische Lösemittel | | | | | | | | | | | | | | | | |
|---|---|---|---|---|---|---|---|---|---|---|---|---|---|---|---|---|
| Butyldiglykolacetat / MPA | 30 | 30 | 30 | 30 | 30 | 30 | 30 | 30 | 30 | 30 | 30 | 30 | 30 | 30 | 30 | 30 |
| Gesamtmenge | 100 | 100 | 100 | 100 | 100 | 100 | 100 | 100 | 100 | 100 | 100 | 100 | 100 | 100 | 100 | 100 |
| Bindemittel: Pigmentverhältnis in Gew.-% | 1,0: 2,0 | 1,0: 2,0 | 1,0: 2,0 | 1,0: 3,0 | 1,0: 3,0 | 1,0: 3,0 | 1,0: 4,0 | 1,0: 4,0 | 1,0: 4,0 | 1,0: 4,5 | 1,0: 4,5 | 1,0: 5,0 | 1,0: 5,0 | 1,0: 5,5 | 1,0: 5,5 | 1,0: 6,0 |
| Festkörper: 70 Gew.-% | 23,5: 47,0 | 23,5: 47,0 | 23,5: 47,0 | 17,5: 52,5 | 17,5: 52,5 | 17,5: 52,5 | 14,0: 56,0 | 14,0: 56,0 | 14,0: 56,0 | 12,5: 57,5 | 12,5: 57,5 | 11,5: 58,5 | 11,5: 58,5 | 10,8: 59,2 | 10,8: 59,2 | 10,0: 60,0 |

Für das Bindemittel sind die Bestandteile des Bindemittels jeweils so angegeben, dass sich die Mengen auf 100 Gew.% des Bindemittels beziehen. Die Menge des Bindemittels im Festkörper ist jeweils in der letzten Zeile als oberer Wert angeführt und die Menge der Pigmente im Festkörper ist als unterer Wert angegeben. Die Werte geben an, wie viele Teile Bindemittel und wie viele Teile Pigmente enthalten sind. Die Summe gibt dabei die Anzahl aller Teile an. Beispielsweise bedeutet ein Bindemittel: Pigmentverhältnis von 1,0 : 4,0, dass insgesamt 5 Teile vorliegen, die sich aus 1 Teil Bindemittel und 4 Teilen Pigmenten zusammensetzen. Es liegen demnach bei 70 Gew.% Festkörper 14 Teile Bindemittel und 56 Teile Pigmente vor. Das Bindemittel hat demnach einen Anteil von 20 Gew.% vom Festkörper. Die Menge an Additiven bleibt dabei unberücksichtigt.

Die Zusammensetzungen V1-V16 wurden hergestellt, indem in einer ersten Phase Phenolharz, Lösungsmittel, Entschäumer und Netzmittel einzeln unter leichtem Rühren im Dissolver dispergiert wurden und anschließend die Mischung homogenisiert wurde. Dann wurde das Korrosionsschutzpigment und ggf. das pyrogene Siliciumdioxid zugegeben. Anschließend erfolgte eine Nassvermahlung mit einer Perlmühle (CeO₂-Stab mit ZrO₂-Perlen, 0,80 - 1,00 mm), wobei die Mischung auf eine Feinheit von < 10 µm vermahlen wurde (Grindometer nach Hergmann, DIN 53203).

In einer zweiten Phase wurden die weiteren Bestandteile, also das Leitpigment, die weiteren Bindemittelbestandteile und das restliche Lösungsmittel, unter leichtem Rühren langsam zugegeben und im Dissolver homogenisiert. Die gewünschte Viskosität kann mit dem Lösemittel eingestellt werden. Die homogenisierte Mischung wurde in ein Fass abgefüllt, wobei eine Filtration mit einer Maschenweite von < 80 µm (PES 80/32, 80 µm / 32% offene Siebfläche) durchgeführt wurde.

Für die weiteren Untersuchungen wurden jeweils Metallbleche mit einer der Zusammensetzungen V1 bis V16 beschichtet und die Beschichtungen wurden eingebrannt. Dazu wurde eine Einbrennzeit von 30 s bei 420 ° C Umlufttemperatur mit 2000 U/Min. Lüfterdrehzahl verwendet, da dies einer gewünschten Peak Metal Temperature von über 240° C bei einer Bandgeschwindigkeit von 100 bis 120 Meter/ Sekunde entspricht. Anschließend wurden die Versuche durchgeführt und bewertet.

Die Ergebnisse sind in Tabelle 2 zusammengefasst. Zur Beurteilung der Eigenschaften der einzelnen Zusammensetzung wurden diese mit der im Markt gängigsten Referenz, nämlich Granocoat^{®} ZE der Fa. Henkel mit einer Schichtstärke von 6 µm verglichen.

Als Referenz könnte auch eine in EP 1 030 894 beschriebene Zusammensetzung herangezogen werden.

Falls die Eigenschaft der jeweiligen Zusammensetzung bei gleicher Schichtdicke ähnlich gute oder geringfügig bessere Ergebnisse als die Referenz zeigte, wurde der Wert "∘" vergeben. Bei signifikant besseren Ergebnissen in der jeweiligen Eigenschaft wurde der Wert "+" vergeben und bei überragend besseren Ergebnissen der Wert "++".

**Tab. 2**

| **Haupteigenschaften** | **V-1** | **V-2** | **V-3** | **V-4** | **V-5** | **V-6** | **V-7** | **V-8** | **V-9** | **V-10** | **V-11** | **V-12** | **V-13** | **V-14** | **V-15** | **V-16** |
|---|---|---|---|---|---|---|---|---|---|---|---|---|---|---|---|---|
| Entflammbarkeit | ∘ | ∘ | ∘ | ∘ | ∘ | ∘ | + | + | + | ++ | ++ | ++ | ++ | ++ | ++ | ++ |
| Flexibilität | ++ | ++ | ++ | ++ | ++ | ++ | ++ | ++ | ++ | ++ | + | + | ∘ | ∘ | ∘ | ∘ |
| Schweißeignung | ∘ | ∘ | ∘ | ∘ | ∘ | ∘ | + | + | + | ++ | ++ | ++ | ++ | ++ | ++ | ++ |
| Korrosionsschutz | + | ++ | ++ | + | ++ | ++ | + | ++ | ++ | ++ | + | + | ∘ | ∘ | ∘ | ∘ |

Wie sich aus Tabelle 2 ergibt, hat sich gezeigt, dass die aus den Zusammensetzungen erhaltenen Beschichtungen eine sehr gute Haftung aufwiesen, und insgesamt gut weiterverarbeitet werden konnten, da sie im Tiefziehprozess ohne oder mit Zusatzbeölung gut umformbar waren, verschraubbar, verklebbar, phosphatierbar und KTL-überlackierbar waren. Besonders die aus den Zusammensetzungen V4 bis V16 erhaltenen Beschichtungen waren für eine Phosphatierung und KTL-Überlackierung besonders geeignet.

Zudem zeigten die Beschichtungen eine gute Schweißeignung, wobei vor allem die aus dem Zusammensetzungen V7 bis V16 erhaltenen Beschichtungen besonders gut schweißgeeignet waren auch bei 50 Hz-Verfahren. Bei dieser Untersuchung wurde jeweils eine Lackschicht mit einer Schichtdicke von 8 µm verwendet.

Alle Beschichtungen ermöglichten einen sehr guten Korrosionsschutz. Die Beschichtungen sind daher als KTL-Ersatz geeignet. Dies wurde einerseits im Salznebelsprühtest (NSS DIN EN ISO 9227) untersucht, weiters auch mit der Zyklischen Korrosionsprüfung (DIN ISO 11997 T1-Bbzw. VDA 233-102)

Zudem zeigte sich ein vorteilhaftes Verhalten im Brandfall. Dies wurde mittels eines simulierten "thermischen Durchgehens" von Batteriezellen im Inneren eines Batteriekastens getestet. Die dabei nach der chinesischen Norm GB 38031-2020 angenommene Temperatur von 950°C wurde durch eine Acetylen-Sauerstoff-Flamme auf der Rückseite des beschichteten Blechs simuliert. Dabei entzündete sich die Beschichtung selbst bei heller Gelbglut > 1100°C nicht. Ein zum Vergleich erhitztes Blech mit handelsüblicher KT-Lackierung brannte mit offener, rußender Flamme. Dieaus den Zusammensetzungen V7 bis V16 erhaltenen Beschichtungen entzündeten sich selbst bei heller Gelbglut >1100° C nicht. Selbst die Referenzbeschichtung mit Granocoat^{®} ZE entzündete sich bei diesen Versuchsbedingungen.

Es zeigte sich, dass alle Beschichtungen einen sehr guten Korrosionsschutz bereitstellten. Weiters zeigten alle Beschichtungen eine hohe Flexibilität, da sie im Tiefziehprozess gut umformbar waren. Alle Beschichtungen waren schweißgeeignet, wobei sich die Beschichtungen aus den Zusammensetzungen V7 bis V16 eine besonders gute Schweißbarkeit aufwiesen. Zudem waren alle Beschichtungen nicht entzündbar, wobei die Beschichtungen aus den Zusammensetzungen V7 bis V16 sich besonders auszeichneten.

Die aus den Zusammensetzungen V1 bis V16 erhaltenen Beschichtungen sind daher sehr gut zur Beschichtung von Batteriekästen geeignet und können auch in anderen Anwendungsgebieten, die einen hohen Schutz gegen Korrosion, mechanische und thermische Belastungen erfordern zur Anwendung gelangen.

## Patentansprüche

1. Zusammensetzung zur Beschichtung von Metalloberflächen umfassend
a) ein Bindemittel umfassend
- ein Phenolharz,
- ein Epoxidharz,
und
- ein Polyisocyanat,
b) zumindest ein Leitpigment
und
c) ein Lösungsmittel.

2. Zusammensetzung nach Anspruch 1, wobei das Leitpigment mit 50,0 Gew.% bis 90,0 Gew.%, insbesondere mit 60,0 bis 85,0 Gew.%, vorzugsweise mit 70,0 Gew.% bis 80,0 Gew.%, bezogen auf den Festkörper enthalten ist.

3. Zusammensetzung nach Anspruch 1 oder 2, wobei zumindest ein Korrosionsschutzpigment enthalten ist, wobei insbesondere vorgesehen ist, dass das Korrosionsschutzpigment ausgewählt ist aus der Gruppe umfassend Zinkphosphate, Aluminium-Triphosphate, Zinkoxid und Silikate.

4. Zusammensetzung nach einem der Ansprüche 1 bis 3, wobei das Phenolharz mit 2,0 Gew.% bis 15,0 Gew.%, insbesondere mit 4,0 Gew.% bis 10,0 Gew.%, vorzugsweise mit 6,0 Gew.% bis 8,0 Gew.%, bezogen auf den Festkörper enthalten ist.

5. Zusammensetzung nach einem der Ansprüche 1 bis 4, wobei das Epoxidharz mit 1,0 Gew.% bis 10,0 Gew. %, insbesondere mit 2,5 Gew.% bis 7,5 Gew.%, vorzugsweise mit 4,0 Gew.% bis 6,0 Gew.% bezogen auf den Festkörper enthalten ist.

6. Zusammensetzung nach einem der Ansprüche 1 bis 5, wobei das Epoxidharz ein Phenoxyharz ist, insbesondere mit einer Molmasse von 52000 bis 60000 Dalton, vorzugsweise mit einer Molmasse von 52000 bis 55000 Dalton.

7. Zusammensetzung nach einem der Ansprüche 1 bis 6, wobei das Bindemittel ein Polyesterharz enthält, wobei insbesondere vorgesehen ist, dass das Polyesterharz mit 0,1 Gew.% bis 5,0 Gew.%, insbesondere mit 0,3 Gew.% bis 3,0 Gew.%, vorzugsweise mit 0,5 Gew.% bis 2,0 Gew.%, bezogen auf den Festkörper enthalten ist.

8. Zusammensetzung nach einem der Ansprüche 1 bis 7, wobei das Polyisocyanat ein aliphatisches Polyisocyanat ist und/oder, wobei das Polyisocyanat mit 1,0 Gew.% bis 10 Gew.%, insbesondere mit 2,5 Gew.% bis 6,5 Gew%, vorzugsweise mit 3,5 Gew.% bis 5,5 Gew.%, bezogen auf den Festkörper enthalten ist.

9. Zusammensetzung nach einem der Ansprüche 1 bis 9, wobei das Verhältnis in Gew.% von dem Bindemittel zu den Pigmenten 1,0 : 2,0 bis 1,0 : 6,0, insbesondere 1,0 : 4,0 bis 1,0 : 6,0, vorzugsweise 1,0 : 4,0 bis 1,0 : 5,0, noch bevorzugter 1,0 : 4,0 bis 1,0 : 4,6, beträgt.

10. Zusammensetzung nach einem der Ansprüche 1 bis 9, wobei das Lösungsmittel ausgewählt ist aus der Gruppe von Estern, insbesondere Methoxypropylacetat und/oder Butyldiglycolacetat, Ketonen, insbesondere Cyclohexanon, aromatischen Kohlenwasserstoffen, insbesondere Solvent Naphta, und Mischungen davon.

11. Zusammensetzung nach einem der vorangehenden Ansprüche umfassend
- ein Phenolharz mit 2 bis 15 Gew.%,
- ein Epoxidharz mit 1 bis 10 Gew.%,
- ein Polyesterharz mit 0 bis 5 Gew.%,
- ein Polyisocyanat mit 1 bis 10 Gew.%,
- ein Leitpigment mit 50 bis 90 Gew.%,
- ein Korrosionsschutzpigment mit 0 bis 15 Gew.%,
bezogen auf den Festkörper.

12. Verfahren zum Beschichten einer Metalloberfläche
**dadurch gekennzeichnet, dass**
- eine Metalloberfläche mit einer Zusammensetzung nach einem der Ansprüche 1 bis 11 beschichtet wird, und
- die Zusammensetzung bei Temperaturen von 150 °C bis 250 °C Peak Metal Temperature eingebrannt wird, wobei insbesondere vorgesehen ist, dass die Einbrennzeit 15 Sekunden bis 30 Sekunden beträgt.

13. Metallblech oder Metallgegenstand mit einer Beschichtung hergestellt nach einem Verfahren nach Anspruch 12 und/oder
mit einer Beschichtung umfassend
- eine, insbesondere isocyanatisch vernetzte, duroplastische Matrix umfassend
- ein Phenolharz,
- ein Epoxidharz, insbesondere ein Phenoxyharz,
- insbesondere ein Polyesterharz,
sowie
- ein in der duroplastischen Matrix verteiltes Leitpigment und
- insbesondere ein in der duroplastischen Matrix verteiltes Korrosionsschutzpigment.

14. Metallblech oder Metallgegenstand nach Anspruch 13, wobei die Beschichtung eine Schichtdicke von 2 µm bis 15 µm, insbesondere von 4 µm bis 8 µm, aufweist.

15. Batteriekasten, insbesondere für die Batterie eines Elektrofahrzeuges, umfassend eine, insbesondere der Umgebung des Batteriekastens zugewandte, beschichtete Metalloberfläche, wobei die Beschichtung hergestellt ist in einem Verfahren nach Anspruch 12,
und/oder
wobei die Beschichtung umfasst:
- eine, insbesondere isocyanatisch vernetzte, duroplastische Matrix umfassend ein Phenolharz, ein Epoxidharz, wobei das Epoxidharz insbesondere ein Phenoxyharz ist, und insbesondere ein Polyesterharz,
sowie
- ein in der duroplastischen Matrix verteiltes Leitpigment und
- insbesondere ein in der duroplastischen Matrix verteiltes Korrosionsschutzpigment.
